(19) Europäisches Patentamt
European Patent Office
Office européen des brevets

(11) EP 4 775 969 A1

(12) DEMANDE DE BREVET EUROPEEN

(43) Date de publication:
15.07.2026 Bulletin 2026/29

(21) Numéro de dépôt: 26151744.5

(22) Date de dépôt: 14.01.2026

(51) Classification Internationale des Brevets (IPC):
G01N 23/20 (2018.01)    G01N 23/20016 (2018.01)
G01N 23/207 (2018.01)    G01N 23/2055 (2018.01)

(52) Classification Coopérative des Brevets (CPC):
G01N 23/20016; G01N 23/20; G01N 23/2055;
G01N 23/207; G01N 2223/056; G01N 2223/0566;
G01N 2223/605; G01N 2223/66

(84) Etats contractants désignés:
AL AT BE BG CH CY CZ DE DK EE ES FI FR GB
GR HR HU IE IS IT LI LT LU LV MC ME MK MT NL
NO PL PT RO RS SE SI SK SM TR
Etats d'extension désignés:
BA
Etats de validation désignés:
GE KH LA MA MD TN

(30) Priorité: 14.01.2025 FR 2500377

(71) Demandeurs:
• BRGM
45060 Orléans Cedex 2 (FR)
• TerrAnalytiX
45150 Jargeau (FR)

(72) Inventeurs:
• PILLIERE, Henry
45150 Jargeau (FR)
• DELCHINI, Sylvain
41600 Lamotte (FR)

(74) Mandataire: Novagraaf Technologies
2 rue Sarah Bernhardt
CS90017
92665 Asnières-sur-Seine Cedex (FR)

(54) PROCÉDÉ DE CARACTÉRISATION D'UN MATÉRIAU POLYCRISTALLIN PAR DIFFRACTOMÉTRIE EN VUE D'UNE ANALYSE CRISTALLOGRAPHIQUE

(57) Procédé (100) de caractérisation d'un matériau polycristallin par diffractométrie en vue d'une analyse cristallographique, **caractérisé en ce que** le procédé comprend en outre :
- une étape de découpage (130) de la plage angulaire de déviation en différentes régions angulaires (IA1, IA2, IA3, IA4, IA5, IA6, IA7, IA8, IA9), et
- dans l'itération :
* une étape d'intégration (140) de chaque région angulaire (IA1, IA2, IA3, IA4, IA5, IA6, IA7, IA8, IA9) pour obtenir un résultat d'intégration pour chaque région angulaire (IA1, IA2, IA3, IA4, IA5, IA6, IA7, IA8, IA9),
* une étape d'estimation (150) si tous les résultats d'intégration sont stables, et en ce que on utilise le résultat de l'étape d'estimation comme critère d'arrêt (150).

[Fig. 5]

**Description**

L'invention concerne un procédé de caractérisation d'un matériau polycristallin par diffractométrie en vue d'une analyse cristallographique.

La diffractométrie et la cristallographie sont des techniques permettant d'étudier la structure des matériaux cristallins, notamment les matériaux polycristallins. La diffractométrie peut être obtenue par rayons X, neutrons ou électrons. La diffractométrie, par exemple des rayons X, est une technique fondée sur la diffraction des rayons X par le matériau cristallin à analyser. La diffraction consiste à envoyer un faisceau incident qui, en rencontrant le matériau cristallin, est renvoyé dans des directions spécifiques déterminées par la longueur d'onde du rayonnement et par la structure et l'orientation du réseau cristallin de ce matériau. Pour effectuer la diffraction, un diffractomètre est l'instrument communément utilisé. Le diffractomètre permet d'établir un graphique, appelé diffractogramme, représentant le faisceau diffracté en fonction des angles de diffraction. Ce diffractogramme permet de réaliser une analyse quantitative pour estimer la proportion relative de chaque phase cristalline dans un échantillon d'un matériau cristallin ou polycristallin. La cristallographie, quant à elle, utilise les informations de la diffraction, c'est-à-dire du diffractogramme, pour reconstruire la structure tridimensionnelle des cristaux individuels d'un matériau cristallin. Ensemble, la diffractométrie et la cristallographie fournissent des données sur la structure cristalline, comme les paramètres de maille cristalline, la disposition atomique d'une maille cristalline, l'état de cristallinité et la texture cristalline.

En général, la diffraction sur poudre est utilisée pour caractériser un matériau cristallin. Classiquement, le matériau est broyé en poudre fine, afin d'obtenir un nombre de grains suffisamment important pour acquérir un diagramme de diffraction de poudre représentatif de l'échantillon analysé. D'après la norme NF A 09-282, il est adopté une granulométrie optimale d'environ 20 μm (micromètres). Cette faible granulométrie est importante car elle permet d'obtenir un diffractogramme représentatif du réseau cristallin et des proportions de chacune des phases cristallines présentes dans ce matériau cristallin. En effet, la faible granulométrie assure une meilleure distribution aléatoire des orientations cristallines. En général, des instruments de pulvérisation utilisables uniquement en laboratoire sont expressément prévus à cet effet.

Un inconvénient d'un tel dispositif d'analyse est qu'il est compliqué d'obtenir une poudre fine de granulométrie optimale uniforme permettant de produire un diffractogramme représentatif du matériau cristallin. En effet, la pulvérisation n'assure pas que les cristallites de l'échantillon pulvérisé présentent une même granulométrie. Une dispersion trop importante de la taille des cristallites fausse les intensités relatives et les largeurs de pics de diffraction, et donc fausse les résultats pour mesure quantitative. Dans ce cas l'analyse doit être rejetée car elle n'est pas représentative de l'échantillon.

Par ailleurs, aujourd'hui, la consommation mondiale en ressources primaires minérales est en constante augmentation, ce qui nécessite d'optimiser les rendements de production à tous les niveaux de la chaine de valeur, par exemple l'exploration, l'exploitation, le traitement et le recyclage, de préférence hors des conditions de laboratoires. Afin de contribuer au mieux à cela, des nouvelles approches d'analyses sur site en temps réel ont été développées. On connaît en particulier des dispositifs d'analyse par diffractométrie adaptés pour être utilisés sur site. Ces dispositifs requièrent un simple broyage et un tamisage du matériau cristallin pour réaliser une diffraction par rayons X procurant des diffractogrammes analysables en cristallographie malgré une granulométrie plus élevée. Pour de tels dispositifs, il est possible de prendre les mesures de diffraction en grand nombre afin de s'assurer d'obtenir un diffractogramme représentatif du matériau cristallin. Toutefois, un tel processus est chronophage et si la diffraction n'a pas été réalisée suffisamment de fois, les résultats de diffraction peuvent conduire à une surestimation des phases cristallines présentes dans le matériau cristallin.

Le document US2021033546A1 se rapporte à la mesure de la distribution de la taille des cristallites dans des matériaux polycristallins par diffraction RX en deux dimensions.

L'invention a notamment pour but de garantir la fiabilité d'une analyse de diffractométrie et d'optimiser la durée d'une telle analyse.

A cet effet, l'invention a pour objet un procédé de caractérisation d'un matériau polycristallin par diffractométrie en vue d'une analyse cristallographique, le procédé comprenant un processus itératif qui prévoit les étapes suivantes :

a) réaliser une mesure sur une fraction d'un échantillon du matériau polycristallin pour obtenir un diffractogramme défini sur une plage angulaire de déviation,
b) si l'étape a) a déjà été réitérée, faire une sommation de ce diffractogramme avec des diffractogrammes obtenus lors d'itérations précédentes,
c) réitérer à partir de l'étape a) pour réaliser une nouvelle mesure sur une nouvelle fraction de l'échantillon jusqu'à satisfaire un critère d'arrêt,

le procédé comprenant en outre :

-    une étape de découpage de la plage angulaire de déviation en différentes régions angulaires,

et
- dans l'itération :

* une étape d'intégration de chaque région angulaire pour obtenir un résultat d'intégration pour chaque région angulaire,
* une étape d'estimation si tous les résultats d'intégration sont stables,

et en ce qu'on utilise le résultat de l'étape d'estimation comme critère d'arrêt.

Autrement dit, l'invention a pour objet un procédé de caractérisation d'un matériau polycristallin par diffractométrie en vue d'une analyse cristallographique, le procédé comprenant un processus itératif qui prévoit les étapes suivantes :

- réaliser une mesure sur une fraction d'un échantillon du matériau polycristallin pour obtenir un diffractogramme défini sur une plage angulaire de déviation,
- réitérer l'étape précédente pour réaliser une nouvelle mesure sur une nouvelle fraction de l'échantillon et faire une sommation des diffractogrammes obtenus jusqu'à satisfaire un critère d'arrêt,

le procédé comprenant en outre :

- une étape de découpage de la plage angulaire de déviation en différentes régions angulaires, et
- dans l'itération :

* une étape d'intégration de chaque région angulaire pour obtenir un résultat d'intégration pour chaque région angulaire,
* une étape d'estimation si tous les résultats d'intégration sont stables,

et en ce qu'on utilise le résultat de l'étape d'estimation comme critère d'arrêt.

Ainsi, l'invention propose un processus itératif permettant de vérifier si la diffraction réalisée sur un matériau polycristallin, est suffisamment représentative de ce matériau polycristallin, plus particulièrement du réseau cristallin, pour qu'une analyse cristallographique puisse être réalisée avec la moindre erreur possible. De manière avantageuse, l'invention propose de prendre en considération différentes régions angulaires sur la plage de déviation d'un diffractogramme et de réaliser le processus itératif pour chacune de ces régions angulaires jusqu'à ce que toutes ces régions satisfassent un critère d'arrêt de stabilité. La stabilité indique qu'un nombre suffisant de cristallites ont été éclairées pour chacune des phases constitutives de l'échantillon. La dernière sommation des diffractogrammes peut donc être utilisée pour caractériser l'échantillon. Il est ainsi possible de déterminer si les mesures ont permis d'obtenir des informations suffisantes sur l'orientation de chaque phase constitutive de l'échantillon avant l'extraction des paramètres structuraux. Contrairement à l'art antérieur, la présente invention propose d'isoler des régions angulaires, et conséquemment de séparer les régions d'intérêts d'autres régions contenant des bruits de fond pour minimiser les effets de ces bruits de fond sur la statistique de la mesure quantitative. En isolant les régions angulaires d'intérêt, il est possible d'identifier les hétérogénéités d'orientation cristallines, malgré la sommation des diffractogrammes. On comprend également que le procédé proposé reste avantageux pour déterminer de manière fiable les proportions relatives des phases cristallines, même en cas de dispersion de la taille des cristallites. De plus, le découpage de la plage angulaire permet la simplification des données et la réduction du temps de calcul. En effet, le processus itératif est arrêté lorsque le critère de stabilité est satisfait, évitant ainsi de réaliser des mesures superflues tout en garantissant que suffisamment de mesures ont été prises pour obtenir une représentativité fiable du matériau polycristallin.

On entend par « matériau polycristallin », un matériau comprenant un assemblage de cristallites de taille variable et pouvant répondre à une règle d'orientation (anisotropie de texture) ou non (isotrope). Chaque cristallite présente avantageusement une orientation cristalline définie. De préférence, le matériau polycristallin est un matériau polyphasique ou un matériau monophasique. Le terme « fraction de l'échantillon » correspond à une surface unitaire ou à un volume du matériau polycristallin avec lequel interagit un faisceau incident d'un rayon de diffraction, par exemple un faisceau de rayons X. Le terme « diffractogramme » correspond à une représentation graphique obtenue après la diffraction du faisceau incident, montrant l'intensité de rayons détectés en fonction d'un l'angle de déviation sur cette surface du matériau polycristallin, donc sur la fraction de l'échantillon. Le diffractogramme représente donc l'intensité des rayons diffractés sur une plage angulaire de déviation. On entend par « intégration du diffractogramme sur chaque région angulaire », le fait de ramener un morceau de courbe (dans une région angulaire ciblée) à une grandeur physique, par exemple par une intégrale arithmétique (surface sous la courbe), un maximum de la courbe, une surface approximée sous la courbe, entre autres. De préférence, le résultat d'intégration correspond à la grandeur physique obtenue suite à l'intégration du diffractogramme sur une région angulaire ciblée.

Le procédé de caractérisation peut en outre comprendre l'une ou plusieurs des caractéristiques optionnelles suivantes, prises seules ou en combinaison :

- L'étape de découpage découpe la plage angulaire de déviation en différentes régions angulaires régulières. Autrement dit, les régions angulaires sont de tailles similaires. Par « taille », on entend l'étendue de la région angulaire sur la plage angulaire de déviation.

- L'étape de découpage découpe la plage angulaire de déviation en différentes régions angulaires présentant des tailles différentes.

- Les régions angulaires sont prédéfinies avant de réaliser le processus itératif.

Dans ce cas, les régions angulaires sont, de préférence, prédéfinies en fonction des résultats théoriques connus et attendus pour un matériau cristallin connu. Ainsi, les données théoriques permettent de prédéfinir une ou plusieurs régions où les intensités les plus importantes, c'est-à-dire des pics, sont attendues et également les régions où les intensités moins importantes sont attendues, pour calculer les résultats d'intégration. Les régions angulaires peuvent être de tailles différentes ou similaires. Les régions angulaires où des intensités moins importantes pour la caractérisation du réseau cristallin sont attendues, comprennent des données qui sont avantageusement plus simple à intégrer. Ainsi, non seulement les données sont simplifiées, mais également le temps de calcul est réduit. De manière alternative, les régions angulaires où des intensités moins importantes pour la caractérisation du réseau cristallin sont attendues peuvent être omises dans l'étape d'intégration. Ainsi, l'intégration omet des données « inutiles » pour davantage réduire le temps de calcul. De préférence, les régions angulaires où les intensités plus importantes sont attendues sont moins étendues que les régions angulaires où les intensités moins importantes sont attendues.

- Les régions angulaires sont définies après une première mesure.

Dans ce cas, les régions angulaires sont définies en fonction des pics obtenus après une première mesure. Les régions angulaires peuvent être de tailles différentes ou similaires.

- Chaque diffractogramme est obtenu par émission d'un faisceau incident sur la fraction d'échantillon et par mesure d'un faisceau diffracté sur une plage angulaire de déviation, le faisceau incident présentant un angle d'incidence constant.

Un faisceau incident interagit avec une fraction de l'échantillon. Ce faisceau est diffracté (ou renvoyé) en plusieurs rayons dans des directions spécifiques répondant à la loi de Bragg, appelé faisceau diffracté. Le faisceau diffracté, ainsi que l'angle de déviation (ou de diffraction) de ce faisceau, est détecté. L'angle d'incidence correspond à l'angle formé entre le faisceau incident et la surface au point d'incidence. L'angle d'incidence est avantageusement constant pour faciliter et simplifier l'interprétation des données du diffractogramme. En effet, en maintenant l'angle d'incidence constant, la sommation des diffractogrammes est plus facilement obtenue et ne requiert pas d'ajustements supplémentaires. En outre, le volume de la fraction interagissant avec le rayon incident est constant et facilite l'identification des hétérogénéités entre les différentes cristallites dans le matériau polycristallin.

- Pour estimer si chaque résultat d'intégration d'une région angulaire est stable, on compare deux résultats d'intégration consécutifs.

La stabilité est un indicateur de la fiabilité du résultat d'intégration. Par comparaison de deux résultats d'intégration consécutifs, il est possible de vérifier si les deux résultats sont différents ou similaires. Dans le cas où les résultats sont différents, il est considéré que la stabilité n'est pas atteinte, et dans le cas où les résultats sont similaires, il est considéré que la stabilité est atteinte.

- Pour estimer si le résultat d'intégration est stable, on détermine un critère de stabilité. De préférence, le critère de stabilité est un coefficient de variation. Encore de manière préférentielle, on calcule la moyenne d'au moins deux mesures consécutives.

- Avant de réaliser l'étape a), le matériau polycristallin est fragmenté.

Par « fragmenté », on entend que le matériau polycristallin est grossièrement réduit en fragments, c'est-à-dire le matériau polycristallin est cassé ou brisé en morceaux relativement gros. Il est également entendu que le matériau polycristallin n'est pas finement broyé. Le fait de fragmenter le matériau polycristallin permet de préserver les propriétés physico-chimiques du matériau polycristallin, des propriétés qui peuvent être perdues lors d'un broyage. Ainsi, un échantillon massif polycristallin dit « à gros grain » pourra être analysé de cette manière. De manière avantageuse, la fragmentation du matériau polycristallin est réalisée hors des conditions de laboratoires habituelles, de préférence sur le terrain.

Alternativement, à l'étape a) une mesure est réalisée sans fragmentation préalable du matériau polycristallin.

- Le matériau polycristallin présente une granulométrie supérieure à 20 $\mu$m (micromètres), de préférence supérieure à 50 $\mu$m.

De manière avantageuse, la présente invention est mise en œuvre hors des conditions de laboratoire. Ainsi, le matériau polycristallin ne peut être finement broyé avant diffraction. Dans le cadre d'une analyse cristallographique à réaliser sur site, le procédé est mis en œuvre avec un matériau polycristallin présentant une granulométrie supérieure à 20 $\mu$m, soit une granulométrie supérieure à celle d'une poudre fine.

De préférence, le matériau polycristallin présente une granulométrie inférieure à 500 $\mu$m, encore de préférence inférieure à 300$\mu$m.

- La diffractométrie est une diffraction de rayons X.

- L'invention a également pour objet un dispositif de caractérisation d'un matériau polycristallin par diffractométrie en vue d'une analyse cristallographique, comprenant des moyens prévus pour mettre en œuvre les étapes du procédé tel que décrit ci-dessus. Autrement dit, le dispositif de caractérisation comprend une unité de commande ou un processeur prévu(e) pour mettre en œuvre au moins une partie des étapes du procédé tel que décrit ci-dessus.

Le dispositif peut en outre comprendre l'une ou plusieurs des caractéristiques optionnelles suivantes, prises seules ou en combinaison :

- Un disque porte-échantillon monté en rotation, comportant un réceptacle annulaire pour recevoir le matériau polycristallin. De façon avantageuse, le disque porte-échantillon présente une surface supérieure à la surface de l'échantillon interagissant avec un rayon incident.

- Un convoyeur porte-échantillon monté en translation, comportant un réceptacle rectiligne pour recevoir le matériau polycristallin.

L'invention a également pour objet un programme d'ordinateur comprenant des instructions qui, lorsque le programme est exécuté par un ordinateur, conduisent celui-ci à mettre en œuvre au moins une partie des étapes du procédé tel que décrit ci-dessus.

**Brève description des figures**

L'invention sera mieux comprise à la lecture de la description qui va suivre donnée uniquement à titre d'exemple et faite en se référant aux dessins annexés dans lesquels :

[Fig. 1] est une vue schématique d'un diffractomètre montrant un faisceau incident.

[Fig. 2] est une vue schématique du même diffractomètre de la figure 1, montrant en outre le faisceau diffracté issu du faisceau incident.

[Fig. 3] est une vue schématique d'une variante du diffractomètre de la figure 1.

[Fig. 4a] est une vue schématique de dessus d'un disque porte-échantillon monté sur le diffractomètre de la figure 3 avec mise en évidence d'une fraction d'un échantillon.

[Fig. 4b] est une vue identique à celle de la figure 4a avec mise en évidence de 180 fractions d'un même échantillon.

[Fig. 4c] est une vue schématique de dessus d'un convoyeur porte-échantillon avec mise en évidence d'une fraction d'un échantillon.

[Fig. 4d] est une vue identique à celle de la figure 4c avec mise en évidence de 35 fractions d'un même échantillon

[Fig. 5] est une illustration des différentes étapes d'un procédé selon un mode de mise en œuvre de l'invention.

[Fig. 6a] est un exemple de diffractogramme d'une fraction d'un échantillon, dans lequel neuf régions angulaires de tailles similaires sont prévues.

[Fig. 6b] est un graphique représentant l'évolution des résultats d'intégration de chaque région angulaire de la figure 6a.

[Fig. 6c] est un graphique représentant la convergence des différents résultats d'intégration de la figure 6b.

[Fig. 7a] est un graphique représentant l'évolution des résultats d'intégration de chaque région angulaire d'un autre échantillon en considérant des régions angulaires de tailles similaires.

[Fig. 7b] est un graphique représentant la convergence des différents résultats d'intégration de la figure 7a.

[Fig. 8a] est un exemple de diffractogramme d'une fraction d'un échantillon, dans lequel neuf régions angulaires de tailles différentes sont prévues.

[Fig. 8b] est un graphique représentant l'évolution des résultats d'intégration de chaque région angulaire de la figure 8a.

[Fig. 8c] est un graphique représentant la convergence des différents résultats d'intégration de la figure 8b.

[Fig. 9a] est un graphique représentant l'évolution des résultats d'intégration de chaque région angulaire présentant des tailles différentes pour un échantillon de corindon.

[Fig. 9b] est un graphique représentant la convergence des différents résultats d'intégration de la figure 9a.

## Description détaillée

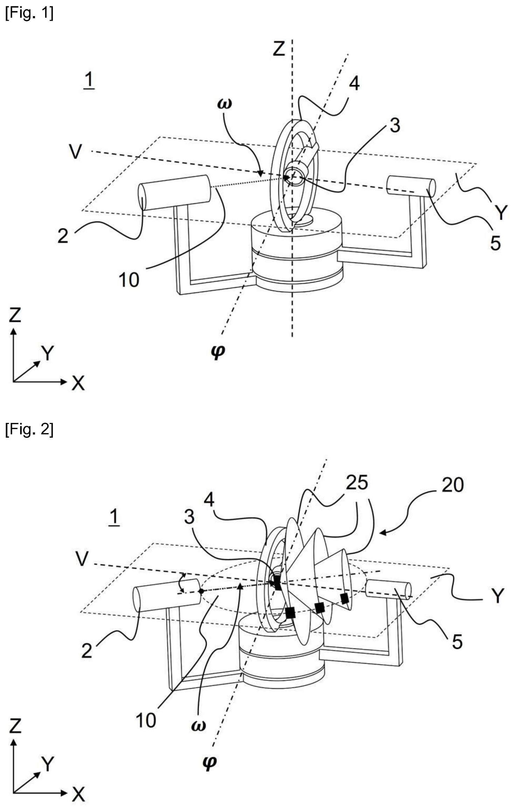

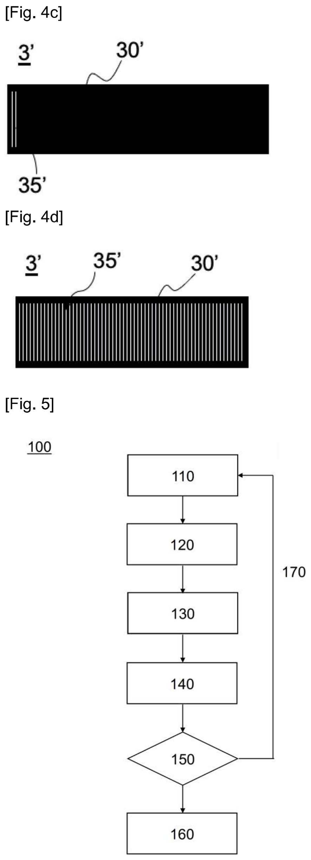

On a représenté sur les figures 1 à 3 un dispositif de caractérisation, appelé diffractomètre 1, notamment un diffractomètre à rayons X. Un tel diffractomètre 1 est adapté pour être utilisé pour la mise en œuvre des étapes d'un procédé 100 de caractérisation d'un matériau polycristallin en vue d'une analyse cristallographique, représenté sur la figure 5. Dans les exemples décrits, le matériau polycristallin est un matériau polyphasique. Il est bien sûr possible de mettre la présente invention en œuvre avec un matériau monophasique. Le procédé 100 selon l'invention permet non seulement de déterminer la structure cristalline du matériau polycristallin, mais également de déterminer de manière fiable le nombre de phases cristallines dans le matériau polycristallin. Dans l'exemple qui suit, le matériau polycristallin présente une granulométrie obtenue après avoir fragmenté le matériau polycristallin en fragments grossiers. Alternativement, une telle granulométrie est obtenue sans fragmentation du matériau.
Le diffractomètre 1 des figures 1 et 2 comprend une source 2 de rayons X, un porte-échantillon plan 3 porté par un goniomètre 4 pouvant réaliser des mouvements de rotation et/ou de translation, et au moins un détecteur 5. La source 2 de rayons X est de préférence un tube à rayons X, à l'intérieur duquel des électrons accélérés frappent une cible métallique pour produire des faisceaux incidents 10 de rayons X. Le matériau polycristallin à analyser, appelé échantillon, est placé sur le porte-échantillon 3. Le goniomètre 4 permet d'orienter le porte-échantillon 3 et ainsi l'échantillon de manière précise par rapport à la source 2 de rayons X et également par rapport au détecteur 5, par rotation autour d'un axe vertical Z, autour d'un axe horizontal (non matérialisé sur le dessin) et autour d'un axe normal $\varphi$ au porte-échantillon 3. Le détecteur 5 est configuré pour détecter au moins un faisceau X diffracté 20. Le détecteur 5 est monté en rotation autour de l'axe vertical Z. Le détecteur 5 peut être un compteur de scintillation, un détecteur à gaz proportionnel ou un détecteur à semi-conducteur.
La source 2 est orientée de manière à émettre un faisceau incident 10 compris dans un plan de mesure Y. Ce plan de mesure Y est perpendiculaire au plan du porte-échantillon 3. L'angle d'incidence $\omega$ est mesuré entre le faisceau incident 10 émis par la source 2 et la surface du porte-échantillon 3. De manière avantageuse, les mesures sont réalisées avec un angle d'incidence $\omega$ constant, notamment pour faciliter et simplifier l'interprétation des données, sans requérir d'ajustements supplémentaires. La position angulaire du détecteur 5 détermine une direction de visée V. Dans le procédé décrit par ce mode de mise en œuvre, l'angle d'incidence $\omega$ est fixe (la source 2 est immobilisée), mais la direction de visée V tourne (le détecteur 5 tourne sur son axe vertical Z) pour mesurer les intensités du faisceau diffracté 20 à différents angles de mesure d'une plage angulaire allant de 0 à 120°.

**EP 4 775 969 A1**

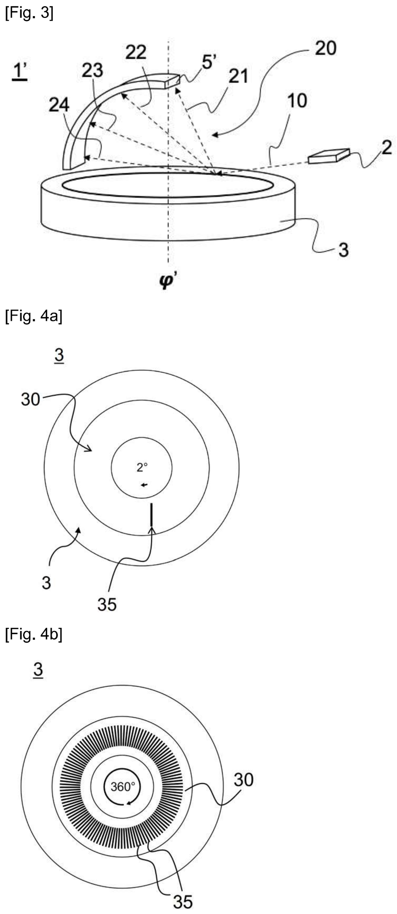

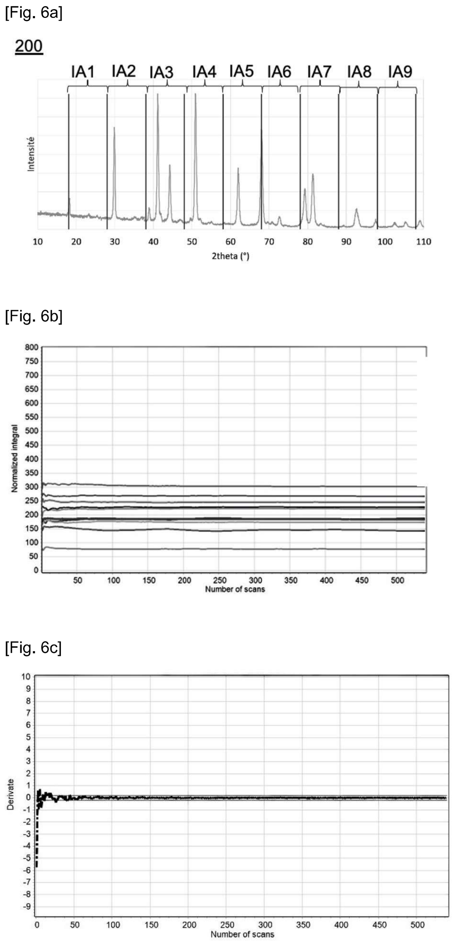

Lors du fonctionnement du diffractomètre 1, la source 2 émet donc un faisceau incident 10 de rayons X qui frappe une surface de l'échantillon du matériau polycristallin (ou une fraction de cette surface) disposé sur le porte-échantillon 3. Sur la figure 1, le faisceau incident 10 est compris dans le plan de mesure Y. Plus particulièrement, le faisceau incident 10 frappe la surface du matériau polycristallin selon l'angle d'incidence ω. Ce faisceau incident 10 est diffracté dans différentes directions en fonction du réseau cristallin de surface frappée. En particulier, pour un matériau polycristallin, les atomes forment un réseau régulier qui diffracte le faisceau X incident 10 selon des angles spécifiques, décrits par la loi de Bragg. Sur la figure 2, des cônes de Debye 15 représentent le faisceau X diffracté 20. Ce faisceau X diffracté 20 est détecté par le détecteur 5 lorsqu'il est pivoté autour de l'axe vertical Z sur toute la plage angulaire de mesure. Ainsi, le faisceau de rayon X incident 10 est dirigé vers une fraction 35 de l'échantillon (visible sur la figure 4a), et le détecteur 5 mesure l'intensité du faisceau X diffracté 20 à différents angles. Les données collectées par le détecteur 5 sont ensuite analysées par un ordinateur (non représenté) pour produire un diffractogramme (exemple représenté sur la figure 6a).

La rotation du porte-échantillon 3 autour d'un axe φ, perpendiculaire à surface du porte-échantillon 3 permet de présenter une nouvelle fraction 35 de l'échantillon ou nouvelle surface de l'échantillon en face de la source 2 des rayons X, afin de réaliser la mesure de cette nouvelle fraction 35 de l'échantillon, comme cela sera décrit en références aux figures 4a et 4b.

La figure 3 représente une variante 1' du diffractomètre 1, dans laquelle les supports de la source 2, du détecteur 5 et du porte-échantillon 3 (c'est-à-dire le goniomètre 4) ont été omis, et le détecteur mobile 5 est remplacé par un détecteur immobile courbé 5' sensible à la position, appelé CPS (pour « Curved Position Sensitive Detector » en anglais). Ce détecteur courbé 5' est conçu pour mesurer rapidement et avec précision les motifs de diffraction des rayons X sur une large plage angulaire. De la même manière que sur les figures 1 et 2, la source 2 de rayons X émet un faisceau incident 10 qui frappe une surface ou une fraction 35 de l'échantillon du matériau polycristallin. En interagissant avec la fraction 35, le faisceau incident 10 est diffracté dans différentes direction en produisant un faisceau diffracté 20 dont des rayons diffractés 21, 22, 23, 24 sont détectés simultanément par le détecteur courbé CPS 5'. Le porte-échantillon 3 est identique à celui des figures 1 et 2 et est monté en rotation autour d'un axe φ', perpendiculaire au plan du porte-échantillon 3, pour placer une nouvelle fraction 35 du même échantillon en face de la source 2 de rayons X afin d'effectuer une nouvelle mesure. De préférence, cet axe φ' est excentré du plan de diffraction, de préférence décalé du centre du porte-échantillon 3.

En référence aux figures 4a, 4b, on va maintenant décrire en détail le porte-échantillon 3 qui est représenté seul. Le porte-échantillon 3 présente une forme de disque et comporte un réceptacle annulaire 30 pour recevoir le matériau polycristallin. Sur la figure 4a, une tranche de l'anneau du réceptacle 30 du matériau polycristallin constitue une fraction 35 de l'échantillon pour le procédé décrit dans le sens où cette fraction 35 est frappée par le faisceau incident 10 de rayon X lorsque le porte-échantillon 3 tourne d'un angle de 2° (degrés) autour de l'axe φ, φ'. La tranche a une largeur si faible qu'on peut l'assimiler à un rayon. Le faisceau diffracté 20 mesuré par le détecteur 5' pendant la rotation de 2° constitue une mesure de la fraction 35 de l'échantillon du matériau. Sur la figure 4b, on voit cent quatre-vingts fractions 35 avec lesquels le faisceau incident 10 a interagi au cours de 180 mesures. Le porte-échantillon 3 de la figure 4b a été tourné de 360° autour de l'axe φ, φ' pour que la mesure de cent quatre-vingts fractions 35 puisse être réalisée.

Les figures 4c et 4d illustrent un porte-échantillon se présentant comme un convoyeur 3' qui comporte un réceptacle rectiligne 30'. Contrairement au disque 3 qui tourne autour d'un axe, le convoyeur 3' est monté en translation. De cette manière, lors de sa translation, le convoyeur 3' expose une tranche, c'est-à-dire une nouvelle fraction 35' de l'échantillon, du matériau polycristallin à la source 2 pour effectuer une nouvelle mesure, comme représenté sur la figure 4d. Dans les paragraphes qui suivent, l'exemple du porte-échantillon 3 en forme de disque est considéré pour la description. Cette description s'applique de la même manière sur le convoyeur 3'.

La figure 5 illustre les différentes étapes du procédé 100 de caractérisation par diffractométrie selon un mode de réalisation de l'invention, en vue d'une analyse cristallographique fiable. Pour ce faire, le procédé 100 comprenant un processus itératif prévoyant de :

- étape 110 : réaliser une mesure sur une fraction 35 d'un échantillon du matériau polycristallin pour obtenir un diffractogramme défini sur une plage angulaire de déviation,
- étape 120 : faire une sommation de ce diffractogramme avec des diffractogrammes obtenus lors des itérations précédentes
- étape 130 : découper la plage angulaire de déviation de la sommation en différentes régions angulaires,
- étape 140 : intégrer chaque région angulaire pour obtenir un résultat d'intégration pour chaque région angulaire,
- étape 150 : estimer si tous les résultats d'intégrations sont stables, si oui, le processus itératif est arrêté 160, si non le processus itératif procède à l'étape 170 : réitérer à partir de l'étape 110 pour réaliser une nouvelle mesure sur une nouvelle fraction jusqu'à satisfaire le critère d'arrêt, c'est-à-dire la stabilité de tous les résultats d'intégration.

L'étape de sommation 120 peut être réalisée après l'étape de découpage 130. L'inversion de ces deux étapes 120, 130 n'influe pas la détermination de la stabilité du résultat d'intégration.

La figure 6a représente un exemple d'un diffractogramme 200 obtenu après l'étape 110 de mesure sur une fraction 35 de l'échantillon. Par exemple, ce diffractogramme 200 peut correspondre à un diffractogramme obtenu après une première mesure, une cinquantième mesure ou une trois-centième mesure. Le diffractogramme 200 représente l'intensité des faisceaux diffractés 20 sur une plage angulaire de déviation. Plus particulièrement, le diffractogramme 200 est un graphique représentant l'intensité des faisceaux de rayons X diffractés 20 (axe des ordonnées) en fonction de l'angle 2θ (axe des abscisses). L'angle entre le faisceau incident 10 et un faisceau diffracté 20 est mesuré en termes de 2θ. Le 2θ sur un diffractogramme est l'angle de diffraction total mesuré. Les positions des intensités par rapport à l'angle 2θ sont caractéristiques des différents plans atomiques dans un cristal. En comparant les positions des intensités, notamment des pics, avec des bases de données de diffraction, il est possible identifier les phases cristallines présentes dans la fraction 35 ayant interagi avec le faisceau incident 10.

Dans l'exemple représenté sur la figure 6a, le matériau polycristallin utilisé est le corindon ($Al_2O_3$) et la granulométrie de matériau polycristallin est comprise entre 0 et 20 μm.

Pour déterminer si le diffractogramme 200 obtenu est suffisamment représentatif du réseau polycristallin, le processus itératif est mis en place selon le procédé 100. Selon l'étape 110, une mesure d'une première fraction 35 est réalisée pour obtenir un premier diffractogramme, notamment par émission d'un faisceau incident 10 sur cette première fraction 35 de l'échantillon placé dans le réceptacle 30, 30'. Ensuite l'étape de sommation 120 est réalisée. Pour une première mesure, l'étape de sommation permet d'obtenir le même premier diffractogramme. La plage angulaire de déviation est ensuite découpée 130 en différentes régions angulaires. Dans l'exemple de la figure 6a, la plage angulaire est découpée en neuf régions angulaires IA1, IA2, IA3, IA4, IA5, IA6, IA7, IA8, IA9 régulières, présentant des tailles similaires. On remarque dans cet exemple, que chaque région angulaire présente une taille de 10°. Puis, chaque région angulaire IA1, IA2, IA3, IA4, IA5, IA6, IA7, IA8, IA9 est intégré 140 pour obtenir un résultat d'intégration pour chacune des régions angulaires.

Selon un exemple, le calcul du résultat d'intégration se fait au moyen de l'équation ci-dessous.

[Math 1]

$$R_{S_i}(N_S) = \frac{1}{N_S} \sum_{S=1}^{N_S} \int_{2\theta min_i}^{2\theta max_i} J_{i(2\theta)}$$

Soit $J_{i(2\theta)}$ l'intensité d'un ou plusieurs pics en fonction de 2θ et [$2\theta min_i$; $2\theta max_i$] correspondant au bornes respectivement haute et basse de chaque domaine angulaire IA1, IA2, IA3, IA4, IA5, IA6, IA7, IA8, IA9. L'intégrale de l'intensité de chaque domaine angulaire IA1, IA2, IA3, IA4, IA5, IA6, IA7, IA8, IA9 est donc calculée. Ensuite la moyenne de toutes les intégrales est déterminée pour obtenir le résultat d'intégration $R_{S_i}(N_S)$. Ce résultat d'intégration correspond à une grandeur physique.

La figure 6b représente un graphique représentant l'évolution des résultats d'intégration $R_{S_i}(N_S)$ pour chacune des domaines angulaires IA1, IA2, IA3, IA4, IA5, IA6, IA7, IA8, IA9. À chaque nouvelle itération, un nouveau résultat d'intégration est calculé pour chaque région angulaire IA1, IA2, IA3, IA4, IA5, IA6, IA7, IA8, IA9, jusqu'à ce que tous les résultats d'intégrations soient stables. Dans l'exemple de la figure 6b, la stabilité est atteinte après cinquante mesures. La stabilité indique qu'un nombre suffisant de cristallites ont été éclairées pour chacune des phases constitutives de l'échantillon. La dernière sommation des diffractogrammes peut donc être utilisée pour caractériser l'échantillon.

Pour mieux relever le moment où le procédé 100 peut être arrêté, deux résultats consécutifs sont comparés. De préférence, l'équation ci-dessous permet d'observer la convergence de chaque résultat d'intégration.

[Math 2]

$$dR_{S_i}(N_S) = \frac{1}{N_S + 1} \sum_{S=1}^{N_S+1} \int_{2\theta min_i}^{2\theta max_i} J_{i(2\theta)} - \frac{1}{N_S} \sum_{S=1}^{N_S} \int_{2\theta min_i}^{2\theta max_i} J_{i(2\theta)}$$

Par l'équation ci-dessus, on comprend que chaque nouveau résultat d'intégration est comparé avec un résultat d'intégration précédent pour déterminer si la stabilité est atteinte. En particulier, cette équation permet d'obtenir le graphique de la figure 6c qui démontre comment le résultat d'intégration varie au cours des différentes mesures. Lorsque

la différence $dR_{S_i}(N_S)$ est autour de 0, il est considéré que la stabilité est atteinte et le procédé 100 est arrêté.

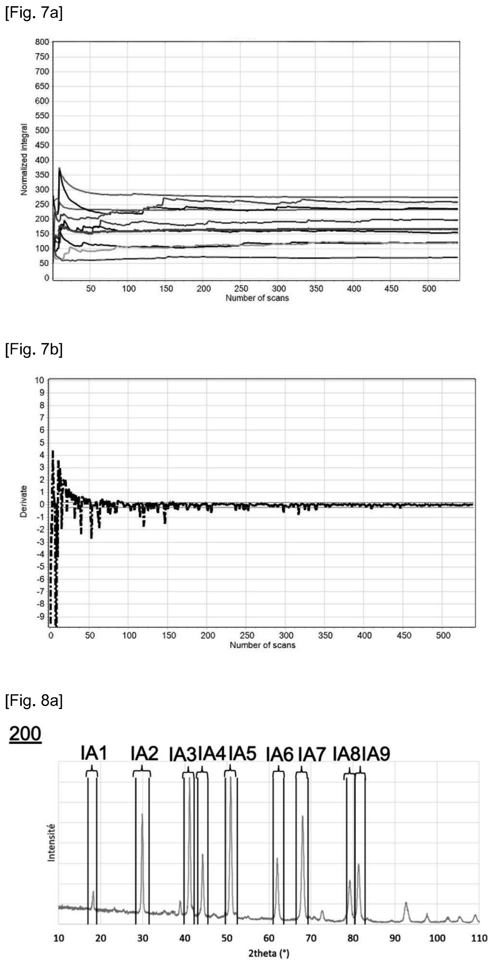

Les figures 7a et 7b représentent des graphiques illustrant respectivement l'évolution de chaque résultat d'intégration et la convergence de ces résultats d'intégrations de différentes régions angulaires comme sur les figures 6b et 6c. L'exemple des figures 7a et 7b correspond à un échantillon de corindon présentant une granulométrie comprise entre 50 et 100 μm et les régions angulaires ont été régulièrement découpées. On remarque ici que la stabilité est obtenue après trois cent cinquante mesures.

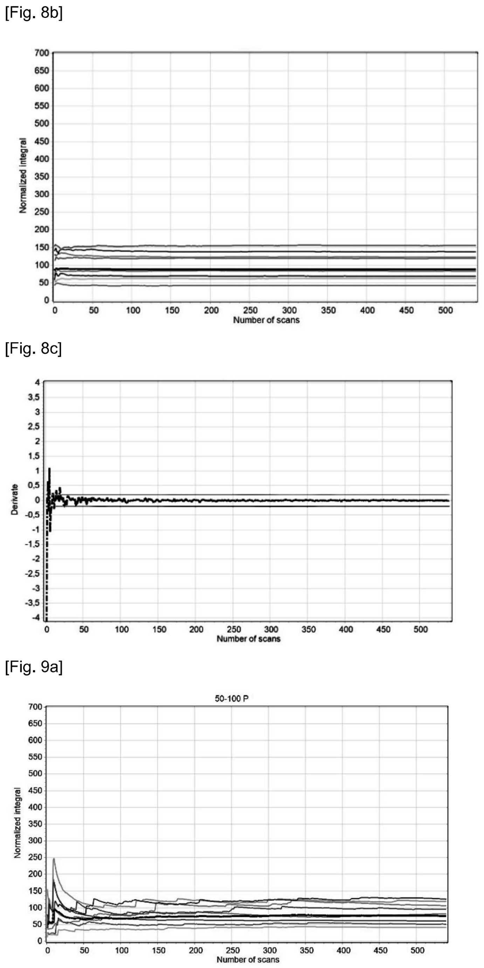

La figure 8a présente le même diffractogramme 200 que celui représenté sur la figure 6a du corindon présentant une granulométrie comprise entre 0 et 20 μm. Cette fois-ci les régions angulaires sont ciblées autour des pics d'intérêts, de sorte que les régions angulaires IA1, IA2, IA3, IA4, IA5, IA6, IA7, IA8, IA9 présentent des tailles différentes. La figure 8b représente l'évolution des résultats d'intégration pour chacune des régions angulaires IA1, IA2, IA3, IA4, IA5, IA6, IA7, IA8, IA9 et la figure 8c représente l'évolution de la convergence de la stabilité de ces régions angulaires. On remarque que même si la façon de découper les régions angulaires a changé, la stabilité est atteinte autour du même nombre de mesure que celui présenté dans les figures 6b et 6c, à savoir autour de la cinquantième mesure.

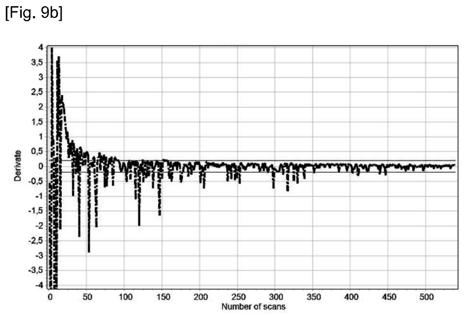

De même, on a représenté sur les figures 9a et 9b le graphique démontrant respectivement l'évolution des résultats d'intégration et de la convergence de ces résultats d'intégration pour chaque région angulaire présentant des tailles différentes pour un échantillon de corindon présentant une granulométrie entre 50 et 100 μm. Comme pour les figures 7a et 7b, on remarque que la stabilité est atteinte après la trois cent cinquantième mesure.

L'invention n'est pas limitée aux modes de réalisation présentés et d'autres modes de réalisation apparaîtront clairement à l'homme du métier.

**Liste de références**

1, 1' : diffractomètre
2 : source de rayons X
3 : porte-échantillon en forme d'un disque
3' : convoyeur porte-échantillon
30 : réceptacle annulaire
30' : réceptacle rectiligne
35, 35' : échantillon
4 : goniomètre
5 : détecteur
5' : détecteur courbé CPS
10 : faisceau incident
20 : faisceau diffracté
21, 22, 23, 24 : rayons diffractés du faisceau diffracté 20
25 : cônes de Debye
100 : procédé de caractérisation
110 : réaliser une mesure sur un nouvel échantillon
120 : intégrer ce diffractogramme pour calculer un résultat d'intégration
130 : estimer si le résultat d'intégration est stable
140 : si le résultat d'intégration est stable, effectuer la caractérisation
150 : si non, réitérer à partir de l'étape de mesure 110
$\varphi$ : axe de rotation du porte-échantillon 3
$\varphi'$ : axe de rotation excentré du porte-échantillon 3
$\omega$ : angle d'incidence
V : direction de visée
Y : plan de mesure
Z : direction verticale
IA1, IA2, IA3, IA4, IA5, IA6, IA7, IA8, IA9 : régions angulaires

**Revendications**

1. Procédé (100) de caractérisation d'un matériau polycristallin par diffractométrie en vue d'une analyse cristallographique, le procédé comprenant un processus itératif qui prévoit les étapes suivantes :

a) réaliser (110) une mesure sur une fraction (35, 35') d'un échantillon du matériau polycristallin pour obtenir un diffractogramme défini sur une plage angulaire de déviation,

b) faire une sommation (120) de ce diffractogramme avec des diffractogrammes obtenus lors d'itérations précédentes,

c) réitérer (170) à partir de l'étape a) pour réaliser une nouvelle mesure sur une nouvelle fraction de l'échantillon jusqu'à satisfaire un critère d'arrêt (160),

**caractérisé en ce que**, le procédé comprend en outre :

- une étape de découpage (130) de la plage angulaire de déviation en différentes régions angulaires (IA1, IA2, IA3, IA4, IA5, IA6, IA7, IA8, IA9), et
- dans l'itération :

   * une étape d'intégration (140) de chaque région angulaire (IA1, IA2, IA3, IA4, IA5, IA6, IA7, IA8, IA9) pour obtenir un résultat d'intégration pour chaque région angulaire (IA1, IA2, IA3, IA4, IA5, IA6, IA7, IA8, IA9),
   * une étape d'estimation (150) si tous les résultats d'intégration sont stables,

et **en ce que** on utilise le résultat de l'étape d'estimation comme critère d'arrêt (150).

2. Procédé (100) selon la revendication précédente, dans lequel chaque diffractogramme est obtenu par émission d'un faisceau incident (10) sur la fraction (35, 35') d'échantillon et mesure d'un faisceau diffracté (20) sur la plage angulaire de déviation, le faisceau incident (10) présentant un angle d'incidence ($\omega$) constant.

3. Procédé (100) selon l'une quelconque des revendications précédentes, pour estimer (130) si chaque résultat d'intégration d'une région angulaire (IA1, IA2, IA3, IA4, IA5, IA6, IA7, IA8, IA9) est stable, on compare deux résultats d'intégration consécutifs.

4. Procédé (100) selon l'une quelconque des revendications précédentes, dans lequel avant de réaliser l'étape a), le matériau polycristallin est fragmenté.

5. Procédé (100) selon l'une quelconque des revendications précédentes, dans lequel le matériau polycristallin présente une granulométrie supérieure à 20 $\mu$m (micromètres), de préférence supérieure à 50 $\mu$m.

6. Procédé (100) selon l'une quelconque des revendications précédentes, dans lequel la diffractométrie est une diffraction des rayons X.

7. Dispositif (1, 1') de caractérisation d'un matériau polycristallin par diffractométrie en vue d'une analyse cristallographique, **caractérisé en ce que** le dispositif (1, 1') comprend des moyens pour mettre en œuvre les étapes du procédé (100) selon les revendications précédentes.

8. Dispositif (1, 1') selon la revendication 7, comportant un disque porte-échantillon (3) monté en rotation, comportant un réceptacle annulaire (30) pour recevoir un échantillon du matériau polycristallin.

9. Dispositif (1, 1') selon la revendication 7, comportant un convoyeur porte-échantillon (3') monté en translation, comportant un réceptacle rectiligne (30') pour recevoir un échantillon du matériau polycristallin.

[Fig. 1]

[Fig. 2]

[Fig. 3]

[Fig. 4a]

[Fig. 4b]

[Fig. 4c]

[Fig. 4d]

[Fig. 5]

[Fig. 6a]

[Fig. 6b]

[Fig. 6c]

[Fig. 7a]

[Fig. 7b]

[Fig. 8a]

[Fig. 8b]

[Fig. 8c]

[Fig. 9a]

[Fig. 9b]

Europäisches
Patentamt

European
Patent Office

Office européen
des brevets

## RAPPORT DE RECHERCHE EUROPEENNE

Numéro de la demande

EP 26 15 1744

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2021/033546 A1 (HE BOB BAOPING [US]) 4 février 2021 (2021-02-04) | 7-9 | INV. G01N23/20 |
| A | * alinéas [0004] - [0007], [0018] - [0020], [0024]; figure 1A * | 1-6 | G01N23/20016 G01N23/207 G01N23/2055 |
| X | BOB BAOPING HE: "Introduction to two-dimensional X-ray diffraction", POWDER DIFFRACTION, vol. 18, no. 02, 1 juin 2003 (2003-06-01), pages 71-85, XP055585523, US ISSN: 0885-7156, DOI: 10.1154/1.1577355 | 7-9 | |
| A | * sections I et III.E; figures 1, 10 * | 1-6 | |
| X | MAESTRACCI BARBARA ET AL: "Simultaneous combined XRF-XRD analysis of geological sample: New methodological approach for on-site analysis on New-Caledonian Ni-rich harzburgite", JOURNAL OF GEOCHEMICAL EXPLORATION, vol. 252, 2 juin 2023 (2023-06-02), page 107250, XP093314491, AMSTERDAM, NL ISSN: 0375-6742, DOI: 10.1016/j.gexplo.2023.107250 | 7-9 | DOMAINES TECHNIQUES RECHERCHES (IPC) G01N |
| A | * résumé et sections 2.5 et 2.6; figure 2 * | 1-6 | |

-----

-/--

Le présent rapport a été établi pour toutes les revendications

| Lieu de la recherche | Date d'achèvement de la recherche | Examinateur |
|---|---|---|
| La Haye | 20 février 2026 | Martin, Hazel |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

page 1 de 2

Europäisches
Patentamt

European
Patent Office

Office européen
des brevets

## RAPPORT DE RECHERCHE EUROPEENNE

Numéro de la demande

EP 26 15 1744

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | DUÉE CÉDRIC ET AL: "Impact of heterogeneities and surface roughness on pXRF, pIR, XRD and Raman analyses: Challenges for on-line, real-time combined mineralogical and chemical analyses on drill cores and implication for "high speed" Ni-laterite exploration", JOURNAL OF GEOCHEMICAL EXPLORATION, vol. 198, 13 décembre 2018 (2018-12-13), pages 1-17, XP093314554, AMSTERDAM, NL ISSN: 0375-6742, DOI: 10.1016/j.gexplo.2018.12.010 | 7-9 | |
| A | * résumé et section 2.2.5 * ----- | 1-6 | |
| | | | DOMAINES TECHNIQUES RECHERCHES (IPC) |

Le présent rapport a été établi pour toutes les revendications

| Lieu de la recherche | Date d'achèvement de la recherche | Examinateur |
|---|---|---|
| La Haye | 20 février 2026 | Martin, Hazel |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................................................
& : membre de la même famille, document correspondant

EPO FORM 1503 03.82 (P04C02)

page 2 de 2

## EP 4 775 969 A1

**ANNEXE AU RAPPORT DE RECHERCHE EUROPEENNE
RELATIF A LA DEMANDE DE BREVET EUROPEEN NO.**

EP 26 15 1744

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

20-02-2026

| Document brevet cité au rapport de recherche | Date de publication | Membre(s) de la famille de brevet(s) | Date de publication |
|---|---|---|---|
| US 2021033546 A1 | 04-02-2021 | EP 3771904 A2 | 03-02-2021 |
| | | US 2021033546 A1 | 04-02-2021 |

EPO FORM P0460

Pour tout renseignement concernant cette annexe : voir Journal Officiel de l'Office européen des brevets, No.12/82

**EP 4 775 969 A1**

## RÉFÉRENCES CITÉES DANS LA DESCRIPTION

**Documents brevets cités dans la description**

- US 2021033546 A1